# EUROPEAN PATENT APPLICATION

(11) **EP 4 539 389 A1**
(43) Date of publication of application: **16.04.2025**
(21) Application number: 24203442.9
(22) Date of filing: 30.09.2024
(51) Int. Cl.: H04L 9/32, H04L 9/00

(54) **METHOD AND SYSTEM FOR INDEPENDENT PROOF-OF-CORRECT-SAMPLING OF STREAMING DATA**

(30) Priority: 10.10.2023 FI 20236119
(71) Applicant: Nokia Solutions and Networks Oy, 02610 Espoo (FI)
(72) Inventor: AKKUS, Istemi Ekin, Stuttgart (DE); HOSTE, Lode, Hove (BE); HEYDARI BENI, Emad, Antwerp (BE)
(74) Representative: Nokia EPO representatives

(57) **Abstract**

Described herein is a network element, a network system, a computer readable medium and a method for determining proof-of-correct-sampling for streaming data in a network. The network element is configured for providing, as a data source, at least a part of a data stream and/or a data item based on the selection of the first network element to be included in a sample of the data stream, wherein the first network element comprises: at least one processor; and at least one memory storing instructions that, when executed by the at least one processor, cause the first network element at least to: employ a first function with a secret key, specific to the first network element, to determine whether the first network element is selected to be included in the sample; wherein, if it is determined that the first network element is selected to be included in the sample, provide, to one or more second network elements, at least a part of the data stream and/or data items as part of the sample and an inclusion proof as proof of properties of the data stream and/or data item.

## Description

### TECHNOLOGY

The present disclosure relates to streaming technology, in particular to proof of correct sampling for streaming data.

### BACKGROUND

Any discussion of the background art throughout the specification should in no way be considered as an admission that such art is widely known or forms part of common general knowledge in the field.

In the field of decentralized data sharing or media streaming, a data stream owner may possess or coordinate several data sources that produce data. This data stream may be useful for other users in many use case scenarios. In one scenario, for example, an equipment provider might want to receive data of the performance of their devices in a communications network. However, customers (e.g., telecom providers) are very reluctant to share this information due to the sensitivity of their own customers data. Furthermore, they may also be concerned that their data is being used by the equipment provider to help their competitors (e.g., telecom provider "A" may not be willing to share data, because it could be used to improve the network of telecom provider "B"). As a result, they have incentives to interfere with the data that is being shared with the equipment provider (e.g., withhold it) and/or exploit the intelligence produced by the equipment provider with other providers data.

One difficulty is that the set of useful properties of a data stream in many cases is unknown. One example of these useful properties is the validity or internal consistency of the data, whether it is meaningful and/or feasible, such as age in years being less than 120 or height being less than 3 meters for individual health data. Another example may be informational properties of the data stream, such as the statistical mean, median, percentiles and/or distribution. However, many of these properties may not be easily known and exhaustively enumerated, because the utility of a data stream often depends on the application use case as well as the properties of the data stream itself.

Another difficulty is the handling large-volume streaming data: The data streams usually require almost real-time processing, requiring practical considerations about performance and cost. The performance is important, because the timeliness of the data stream may alter its value (e.g., a recent data stream may be more useful than an old one). Furthermore, there may be many data sources contributing to the stream at a high rate, the data sources or recipients may have limited network bandwidth and the size of the data may be large. Similarly, the cost plays a role, because generating a proof of a data stream should not be more expensive than the subscription price of the stream; otherwise, there is no point in generating the proof.

Any solution that is targeting the problem of providing stream data to others will have to also consider the fact that stream data owners may or may not control the data sources that contribute to the data stream. Furthermore, the solution would need to ensure that the data stream owner cannot skew the provided stream data towards her own benefit by manipulating the data collection process. Such manipulation may be done by adding/hiding data sources and/or dropping the collected data (i.e., omission of data).

Addressing these particular aspects simultaneously is an open problem. In this relation also proving, by a data stream owner to the potential data users, that the provided sample was created correctly is also an open problem. Therefore, in view of at least some or all of the issues discussed above, there appears to exist a general need to provide a method and system for allowing a data stream owner/broker to provide a data stream to the potential data users in a scalable, private and confidential manner.

### SUMMARY

There may be provided a method to provide proof-of-correct-sampling for streaming data that targets a scenario, in which a data stream owner (or seller) is trying to provide (or even monetize) streaming dataset by providing (or even selling) it to other users, possibly in a data network and/or marketplace or exchange. Before purchase, a potential buyer would like to obtain certain assurances of the data stream (e.g. statistical properties of the data). Due to infeasibility of enumeration of all possible properties that may be useful for a potential buyer's use case for the data as well as the large amount of data being produced in the stream, the stream owner agrees to supply a set of data items coming from various randomly selected (i.e. sampled) set of data sources to the potential buyers, so that they can check these data items according to their needs. These data items constitute a data sample.

Because the stream owner is in possession of the data that can be supplied to potential buyers, some buyers may be reluctant to trust the data stream owner not to interfere with sampling process of the data sources that will produce the data. It assures the potential buyers that the sample of data sources (and hence, their produced data) was created correctly.

In accordance with a first aspect of the present disclosure, there is provided a first network element in a network for providing, as a data source, at least a part of a data stream and/or a data item based on the selection of the first network element to be included in a sample of the data stream, wherein the first network element comprises:
at least one processor; and
at least one memory storing instructions that, when executed by the at least one processor, cause the first network element at least to:
   employ a first function with a secret key (SK), specific to the first network element, to determine whether the first network element is selected to be included in the sample; and/or
   wherein, if it is determined that the first network element is selected to be included in the sample, provide, to one or more second network elements, at least a part of the data stream and/or data items as part of the sample and an inclusion proof indicating that the data to be part of the data sample was computed correctly (and/or also as proof of properties of the data stream and/or data item).

In some examples, the first function is a verifiable random function, VRF, employed at the network element, to independently evaluate the VRF with a secret key (SK) specific to the first network element.

Moreover, the first network element or method may employ Verifiable Random Functions (VRFs) at each data source, such that each data source independently evaluates the VRF with their own secret key and determines whether they are selected in sample. If so, they not only send their data as part of the stream but also the proof that the selection in the sample was computed correctly. As a result, the recipients (i.e. potential buyers) of the sampled data and the proofs check the proofs with the corresponding verification keys of the sources, enabling them to obtain assurances that the sample is computed correctly and is representative of the data stream. Given such a data sample, they can check the sample and evaluate whether it satisfies the requirements of their use case or application. Similarly, each data source that is not selected to be included in the sample sends the proof that they are not selected (but not the data). In other words, in the present disclosure one aim is to define how the data is collected "from" the sources correctly and in a scalable way. Here, these properties mean: scalability = using a subset of all sources to make it scale, correctness = the sources we collect from are picked honestly and fairly.

Having this verifiable sampling process distributed among the data sources avoids the extra costs of transporting data to a central location and processing it there. A stream owner may still want to interfere with the sampling process to skew the sample data to her favour to convince potential buyers (e.g. dropping selective data packets). Such potential interference can be avoided, and the potential data buyers can be protected, because 1) each data source privately evaluates the VRF without involving the stream owner, 2) each data source sends their proofs of their VRF evaluation (even when not selected in the sample and not providing data), and 3) the verifiers (i.e. potential buyers) can keep track of such proofs to determine whether a seller is untrustworthy or the stream is too unreliable, allowing them to avoid purchasing the data stream in either case.

In some examples, if the first network element determines that it is not selected to be included in the sample, the first network element is caused to,
provide, to the second network element, an exclusion proof that said first network element is not selected in the sample, preferably without providing data to be part of the sample.

In some examples, the first network element is a randomly selected data source of a set of data sources;
the first network element may be configured to produce data forming part of the data stream to be provided to the second network element;
the sample may be a subset of dataset items of the data stream determined via at least a statistical sampling method;
the sample includes data items of a plurality of first network elements; and/or
the inclusion proof is for verifying that the selection in the sample was computed correctly.

In some examples, the first network element is further caused to:
evaluate, the first function with the secret key (SK) specific to the first network element and a public key (PK).

In some examples, the first network element is further configured to signs its produced data with its private key that can be checked with the corresponding public key (PK) and/or verification key. to ensure that it was indeed produced by the source that was selected in the sample via the described method.

In some examples, the first network element is further caused to: receive, from the second network element, a control signal; generate, the public key (PK) and/or the secret key (SK); provide, to the second network element, the public key (PK).

In some examples, the data stream is divided into slots; the first network element at each slot produces a part of the data of the data stream; each slot of the data stream is configured with a slot representation value; and wherein, the slot representation value is used as the public key (PK) In a further implementation the slot representation value (i.e., alpha) is used as part of the input to the proof generation and verification as follows: proof = VRF_prove(SK, alpha), and is_verified = VRF_verify(PK, alpha, proof). The public key is actually the corresponding public key to the VRF secret key.

In some examples, the slot representation value is obtained by, updating the slot representation value at predetermined time points, wherein the slot representation value changes incremental at the predetermined time points; or reaching a consensus for a next value of the slot representation value, if the first network element is part of a decentralized blockchain; or receiving, from another network element configured to announce the next value of the slot representation value, the next value of the slot representation value; or obtaining, by requesting from another network element, the next value of the slot representation value.

In some examples, the next value of the slot representation value corresponds to a hash of a previous sample and/or to other arbitrary value determined by another network element.

In some examples, the first network element further comprises: at each slot, the first network element is configured to use the public key (PK) and the secret key (SK) for the first function evaluation and obtain a pi, which is a VRF proof, calculated based on the public key (PK) as proof of properties of the data stream and/or data item.

In some examples, the first network element is configured to obtain a value beta, which is a VRF hash output, and uses beta to evaluate whether itself has been selected to be included in the sample in this slot according to a sampling probability algorithm; and/or wherein, beta is calculated based on pi; and/or the sampling probability is used to compute an expected number of the first network elements in the sample by multiplying the total number of the first network elements and the sampling probability.

In some examples, wherein, the first network element is further caused to: release the secret key (SK) at a predetermined time period, and create a new secret key (SK) for the first function evaluations.

In some examples, wherein the exclusion proof is based on at least one of the following: the number of first network elements, the size of the proof, the size of the data, the size of the public key (PK), the size of the secret key (SK), a sampling probability, and a key release period.

In some examples, wherein the periodical key release depends on at least one of the following: the number of first network elements, the size of the proof, the size of the data, the size of the public key (PK), the size of the secret key (SK), a sampling probability, and a key release period.

In accordance with a second aspect of the present disclosure, there is provided a second network element, for receiving at least a part of a data stream and/or a data item of selected data sources, wherein the second network element comprises: at least one processor; and at least one memory storing instructions that, when executed by the at least one processor, cause the second network element at least to:
receive a sample of the data stream, a declared list of public keys and an inclusion proof set and/or an inclusion proof list;
wherein, the sample is a set of selected parts of the data stream from at least one first network element, and the inclusion proof set and/or the inclusion proof list includes inclusion proofs of corresponding selected parts of the data stream; and
for determining if the sampled data sources were correctly chosen, in particular randomly selected, and that data sources are not added or removed at runtime, verify the sample to determine if the corresponding inclusion proof, as proof of properties of the data stream, is included in the inclusion proof set and/or the inclusion proof list.

In some examples the step of verifying further comprises: receive a signed list of public keys; check if the corresponding inclusion proof is included in the signed list of public keys; or, receive a membership proof of the public keys; check if the corresponding inclusion proof obeys the membership proof.

In some examples the second network element is further caused to, if the corresponding inclusion proof is not included in the inclusion proof set and/or the inclusion proof list, the selected part of the data stream and the corresponding first network element are ignored; otherwise, check the validity of the corresponding inclusion proof for the current slot, and whether the data stream is selected to be in the sample.

In some examples the second network element is further caused to, receive an exclusion proof set and/or an exclusion proof list, wherein, the exclusion proof set and/or the exclusion proof list includes exclusion proofs of first network elements that are not selected as part of the sample.

In some examples the second network element is further caused to, if the first network element is supposed to be in the sample but does not send data, the second network element records the event; the second network element keeps track of how often an exclusion proof is missing from each data source as well as the total of missing exclusion proofs; if the first network element does not continuously send its inclusion proof and/or exclusion proof, the second network element determines an unreliable activity and/or that the data stream is unreliable.

In some examples the second network element is further caused to: obtain, a revealed secret key of one or each previous slot from a first network element; determine if the first network element is supposed to send data in a particular slot of the previous slots; wherein, if the first network element is supposed to send data in that particular slot, and/or check, whether data was received in the particular slot from the first network element, and if no data was received, identify the data stream as unreliable or unsecure.

In some examples the second network element is further caused to: identify the first network element as unreliable if it does not reveal its secret key after a predetermined time period.

In accordance with a another aspect of the present disclosure, there is provided a third network element that controls or owns at least one first network element, the third network element comprising: at least one processor; and at least one memory storing instructions that, when executed by the at least one processor, cause the first network node at least to:
receive, from the first network element, a selected part of the data production as part of a sample, and an inclusion proof that the selected part of the data production in the sample is computed correctly;
add, the selected part of the data production to the sample and the inclusion proof to an inclusion proof set and/or an inclusion proof list; and/or
send, to a second network element, the sample, as well as the inclusion proof set and/or an inclusion proof list.

In some examples the third network element is further caused to: receive, from the first network element, an exclusion proof that they are not selected in the sample; add, the exclusion proof to an exclusion proof set and/or an exclusion proof list; send, to the second network element, the exclusion proof set and/or an exclusion proof list.

In some examples the third network element is further caused to: send, to the second network element, publish number of the first network elements; receive, from the second network element, request stream with sampling probability.

In some examples after the step of receiving, from the second network element, request stream with sampling probability, the third network element is further caused to: send, an Ack to the second network element.

In some examples the third network element is further caused to: collect, from all the first network elements owned by the third network element, public keys (PK), in a list; update, the list when collect new public keys (PK).

In some examples the third network element is further caused to: commit to sampling logic with sampling probability and public key update mechanism; sign the list, sampling logic and update mechanism with its own private key.

In accordance with another aspect of the present disclosure, there is provided a network system for providing a data stream, the system including one or more first network elements, one or more second network elements and/or one or more third network elements.

In accordance with another aspect of the present disclosure, there is provided a method to provide proof-of-correct-sampling for streaming data in a network with at least a first network element and a second network element, wherein the method comprises:
employing, a first function at each first network element, such that each first network element independently evaluates the first function with their own secret key and determines whether they are selected in the sample;
if a first network element determines that it is selected in the sample, provide, to one or more second network elements, at least a part of the data stream and/or data items as part of the sample and an inclusion proof as proof of properties of the data stream and/or data item.

In accordance with another aspect of the present disclosure, there is provided a method for determining proof-of-correct-sampling for streaming data in a network with at least a first network element and a second network element, wherein the method comprises:
receiving, by the second network element, a selected part of the data stream as a sample and an inclusion proof set and/or an inclusion proof list; and
determine the inclusion proofs with corresponding verification keys of the first network element, to determine if the sample is computed correctly and representative of the data stream.

In accordance with another aspect of the present disclosure, there is provided a computer readable medium storing instructions thereon, the instructions, when executed by at least one processing unit of a machine, causing the machine to perform the method as according to the present disclosure.

In addition, according to some other example embodiments, there is provided, for example, a computer program product for a wireless communication device comprising at least one processor, including software code portions for performing the respective steps disclosed in the present disclosure, when said product is run on the device. The computer program product may include a computer-readable medium on which said software code portions are stored. Furthermore, the computer program product may be directly loadable into the internal memory of the computer and/or transmittable via a network by means of at least one of upload, download and push procedures.

While some example embodiments will be described herein with particular reference to the above application, it will be appreciated that the present disclosure is not limited to such a field of use, and is applicable in broader contexts.

Notably, it is understood that methods according to the present disclosure relate to methods of operating the apparatuses according to the above example embodiments and variations thereof, and that respective statements made with regard to the apparatuses likewise apply to the corresponding methods, and vice versa, such that similar description may be omitted for the sake of conciseness. In addition, the above aspects may be combined in many ways, even if not explicitly disclosed. The skilled person will understand that these combinations of aspects and features/steps are possible unless it creates a contradiction which is explicitly excluded.

Implementations of the disclosed apparatuses may include using, but not limited to, one or more processor, one or more application specific integrated circuit (ASIC) and/or one or more field programmable gate array (FPGA). Implementations of the apparatus may also include using other conventional and/or customized hardware such as software programmable processors, such as graphics processing unit (GPU) processors.

Other and further example embodiments of the present disclosure will become apparent during the course of the following discussion and by reference to the accompanying drawings.

### BRIEF DESCRIPTION OF THE DRAWINGS

Figure 1 schematically illustrates an example use case, in which a data stream owner monetizes its data at a data marketplace;
Figure 2 schematically illustrates an example use case, in which a manufacturer desires to provide predictive maintenance on its customers devices;
Figure 3 schematically illustrates an example use case, in which an energy provider desires to obtain household electricity usage data to make informed decisions on its investments;
Figure 4 schematically illustrates a workflow, whereby the data stream owner generates a proof of property and sends it to others, who then verify the proof;
Figure 5 schematically illustrates an example scenario with 5 data sources (sensors) and the epochs (time slots) as sensing periods. The public seeds in the VRF evaluation correspond to the alpha value and are common to all data sources in each epoch;
Figure 6A and 6B schematically illustrates setup proposal between a stream owner/broker and stream receivers/users;
Figure 7A and 7B schematically illustrates a setup;
Figure 8A and 8B schematically illustrates stream usage for each sampling period.

### DESCRIPTION OF EXAMPLE EMBODIMENTS

In the following, different exemplifying embodiments will be described using, as an example of a communication network to which examples of embodiments may be applied, a communication network architecture based on 3GPP standards for a communication network, such as a 5G/NR, without restricting the embodiments to such an architecture, however. It is apparent for a person skilled in the art that the embodiments may also be applied to other kinds of communication networks where mobile communication principles are integrated with a D2D (device-to-device) or V2X (vehicle to everything) configuration, such as SL (side link), e.g. Wi-Fi, worldwide interoperability for microwave access (WiMAX), Bluetooth^{®}, personal communications services (PCS), ZigBee^{®}, wideband code division multiple access (WCDMA), systems using ultra-wideband (UWB) technology, mobile ad-hoc networks (MANETs), wired access, etc. Furthermore, without loss of generality, the description of some examples of embodiments is related to a mobile communication network, but principles of the disclosure can be extended and applied to any other type of communication network, such as a wired communication network.

The following examples and embodiments are to be understood only as illustrative examples. Although the specification may refer to "an", "one", or "some" example(s) or embodiment(s) in several locations, this does not necessarily mean that each such reference is related to the same example(s) or embodiment(s), or that the feature only applies to a single example or embodiment. Single features of different embodiments may also be combined to provide other embodiments. Furthermore, terms like "comprising" and "including" should be understood as not limiting the described embodiments to consist of only those features that have been mentioned; such examples and embodiments may also contain features, structures, units, modules, etc., that have not been specifically mentioned.

A basic system architecture of a (tele)communication network including a mobile communication system where some examples of embodiments are applicable may include an architecture of one or more communication networks including wireless access network subsystem(s) and core network(s). Such an architecture may include one or more communication network control elements or functions, access network elements, radio access network elements, access service network gateways or base transceiver stations, such as a base station (BS), an access point (AP), a NodeB (NB), an eNB or a gNB, a distributed unit (DU) or a centralized/central unit (CU), which controls a respective coverage area or cell(s) and with which one or more communication stations such as communication elements or functions, like user devices or terminal devices, like a user equipment (UE), or another device having a similar function, such as a modem chipset, a chip, a module etc., which can also be part of a station, an element, a function or an application capable of conducting a communication, such as a UE, an element or function usable in a machine-to-machine communication architecture, or attached as a separate element to such an element, function or applicati on capable of conducting a communication, or the like, are capable to communicate via one or more channels via one or more communication beams for transmitting several types of data in a plurality of access domains. Furthermore, core network elements or network functions, such as gateway network elements/functions, mobility management entities, a mobile switching center, servers, databases and the like may be included.

The following description may provide further details of alternatives, modifications and variances: a gNB comprises e.g., a node providing NR user plane and control plane protocol terminations towards the UE, and connected via the NG interface to the 5GC, e.g., according to 3GPP TS 38.300 V16.6.0 (2021-06) section 3.2 incorporated by reference.

A gNB Central Unit (gNB-CU) comprises e.g., a logical node hosting e.g., RRC, SDAP and PDCP protocols of the gNB or RRC and PDCP protocols of the en-gNB that controls the operation of one or more gNB-DUs. The gNB-CU terminates the F1 interface connected with the gNB-DU.

A gNB Distributed Unit (gNB-DU) comprises e.g., a logical node hosting e.g., RLC, MAC and PHY layers of the gNB or en-gNB, and its operation is partly controlled by the gNB-CU. One gNB-DU supports one or multiple cells. One cell is supported by only one gNB-DU. The gNB-DU terminates the F1 interface connected with the gNB-CU.

A gNB-CU-Control Plane (gNB-CU-CP) comprises e.g., a logical node hosting e.g., the RRC and the control plane part of the PDCP protocol of the gNB-CU for an en-gNB or a gNB. The gNB-CU-CP terminates the E1 interface connected with the gNB-CU-UP and the F1-C interface connected with the gNB-DU.

A gNB-CU-User Plane (gNB-CU-UP) comprises e.g., a logical node hosting e.g., the user plane part of the PDCP protocol of the gNB-CU for an en-gNB, and the user plane part of the PDCP protocol and the SDAP protocol of the gNB-CU for a gNB. The gNB-CU-UP terminates the E1 interface connected with the gNB-CU-CP and the F1-U interface connected with the gNB-DU, e.g., according to 3GPP TS 38.401 V16.6.0 (2021-07) section 3.1 incorporated by reference.

Different functional splits between the central and distributed unit are possible, e.g., called options:
Option 1 (1A-like split):
   - The function split in this option is similar to the 1A architecture in DC. RRC is in the central unit. PDCP, RLC, MAC, physical layer and RF are in the distributed unit.
Option 2 (3C-like split):
   - The function split in this option is similar to the 3C architecture in DC. RRC and PDCP are in the central unit. RLC, MAC, physical layer and RF are in the distributed unit.
Option 3 (intra RLC split):
   - Low RLC (partial function of RLC), MAC, physical layer and RF are in the distributed unit. PDCP and high RLC (the other partial function of RLC) are in the central unit.
Option 4 (RLC-MAC split):
   - MAC, physical layer and RF are in the distributed unit. PDCP and RLC are in the central unit.

Or else, e.g., according to 3GPP TR 38.801 V14.0.0 (2017-03) section 11 incorporated by reference.

A gNB supports different protocol layers, e.g., Layer 1 (L1) - physical layer.

The layer 2 (L2) of NR is split into the following sublayers: Medium Access Control (MAC), Radio Link Control (RLC), Packet Data Convergence Protocol (PDCP) and Service Data Adaptation Protocol (SDAP), where e.g.:
- The physical layer offers to the MAC sublayer transport channels;
- The MAC sublayer offers to the RLC sublayer logical channels;
- The RLC sublayer offers to the PDCP sublayer RLC channels;
- The PDCP sublayer offers to the SDAP sublayer radio bearers;
- The SDAP sublayer offers to 5GC QoS flows;
- Comp. refers to header compression and Segm. To segmentation;
- Control channels include (BCCH, PCCH).

Layer 3 (L3) includes e.g., Radio Resource Control (RRC), e.g., according to 3GPP TS 38.300 V16.6.0 (2021-06) section 6 incorporated by reference.

A RAN (Radio Access Network) node or network node like e.g. a gNB, base station, gNB CU or gNB DU or parts thereof may be implemented using e.g. an apparatus with at least one processor and/or at least one memory (with computer-readable instructions (computer program)) configured to support and/or provision and/or process CU and/or DU related functionality and/or features, and/or at least one protocol (sub-)layer of a RAN (Radio Access Network), e.g. layer 2 and/or layer 3.

The gNB CU and gNB DU parts may e.g., be co-located or physically separated. The gNB DU may even be split further, e.g., into two parts, e.g., one including processing equipment and one including an antenna. A Central Unit (CU) may also be called BBU/REC/RCC/C-RAN/V-RAN, O-RAN, or part thereof. A Distributed Unit (DU) may also be called RRH/RRU/RE/RU, or part thereof. Hereinafter, in various example embodiments of the present disclosure, the CU-CP (or more generically, the CU) may also be referred to as a (first) network node that supports at least one of central unit control plane functionality or a layer 3 protocol of a radio access network; and similarly, the DU may be referred to as a (second) network node that supports at least one of distributed unit functionality or the layer 2 protocol of the radio access network.

A gNB-DU supports one or multiple cells, and could thus serve as e.g., a serving cell for a user equipment (UE).

A user equipment (UE) may include a wireless or mobile device, an apparatus with a radio interface to interact with a RAN (Radio Access Network), a smartphone, an in-vehicle apparatus, an IoT device, a M2M device, or else. Such UE or apparatus may comprise: at least one processor; and at least one memory including computer program code; wherein the at least one memory and the computer program code are configured to, with the at least one processor, cause the apparatus at least to perform certain operations, like e.g. RRC connection to the RAN. A UE is e.g., configured to generate a message (e.g., including a cell ID) to be transmitted via radio towards a RAN (e.g., to reach and communicate with a serving cell). A UE may generate and transmit and receive RRC messages containing one or more RRC PDUs (Packet Data Units).

The UE may have different states (e.g., according to 3GPP TS 38.331 V16.5.0 (2021-06) sections 42.1 and 4.4, incorporated by reference).

A UE is e.g., either in RRC_CONNECTED state or in RRC_INACTIVE state when an RRC connection has been established.

In RRC_CONNECTED state a UE may:
- store the AS context;
- transfer unicast data to/from the UE;
- monitor control channels associated with the shared data channel to determine if data is scheduled for the data channel;
- provide channel quality and feedback information;
- perform neighboring cell measurements and measurement reporting.

The RRC protocol includes e.g. the following main functions:
- RRC connection control;
- measurement configuration and reporting;
- establishment/modification/release of measurement configuration (e.g. intra-frequency, inter-frequency and inter-RAT measurements);
- setup and release of measurement gaps;
- measurement reporting.

The general functions and interconnections of the described elements and functions, which also depend on the actual network type, are known to those skilled in the art and described in corresponding specifications, so that a detailed description thereof may omitted herein for the sake of conciseness. However, it is to be noted that several additional network elements and signaling links may be employed for a communication to or from an element, function or application, like a communication endpoint, a communication network control element, such as a server, a gateway, a radio network controller, and other elements of the same or other communication networks besides those described in detail herein below.

A communication network architecture as being considered in examples of embodiments may also be able to communicate with other networks, such as a public switched telephone network or the Internet. The communication network may also be able to support the usage of cloud services for virtual network elements or functions thereof, wherein it is to be noted that the virtual network part of the telecommunication network can also be provided by non-cloud resources, e.g. an internal network or the like. It should be appreciated that network elements of an access system, of a core network etc., and/or respective functionalities may be implemented by using any node, host, server, access node or entity etc. being suitable for such a usage. Generally, a network function can be implemented either as a network element on a dedicated hardware, as a software instance running on a dedicated hardware, or as a virtualized function instantiated on an appropriate platform, e.g., a cloud infrastructure.

Furthermore, a network element, such as communication elements, like a UE, a terminal device, control elements or functions, such as access network elements, like a base station / BS, a gNB, a radio network controller, a core network control element or function, such as a gateway element, or other network elements or functions, as described herein, and any other elements, functions or applications may be implemented by software, e.g., by a computer program product for a computer, and/or by hardware. For executing their respective processing, correspondingly used devices, nodes, functions or network elements may include several means, modules, units, components, etc. (not shown) which are required for control, processing and/or communication/signaling functionality. Such means, modules, units and components may include, for example, one or more processors or processor units including one or more processing portions for executing instructions and/or programs and/or for processing data, storage or memory units or means for storing instructions, programs and/or data, for serving as a work area of the processor or processing portion and the like (e.g. ROM, RAM, EEPROM, and the like), input or interface means for inputting data and instructions by software (e.g. floppy disc, CD-ROM, EEPROM, and the like), a user interface for providing monitor and manipulation possibilities to a user (e.g. a screen, a keyboard and the like), other interface or means for establishing links and/or connections under the control of the processor unit or portion (e.g. wired and wireless interface means, radio interface means including e.g. an antenna unit or the like, means for forming a radio communication part etc.) and the like, wherein respective means forming an interface, such as a radio communication part, can be also located on a remote site (e.g. a radio head or a radio station etc.). It is to be noted that in the present specification processing portions should not be only considered to represent physical portions of one or more processors, but may also be considered as a logical division of the referred processing tasks performed by one or more processors. It should be appreciated that according to some examples, a so-called "liquid" or flexible network concept may be employed where the operations and functionalities of a network element, a network function, or of another entity of the network, may be performed in different entities or functions, such as in a node, host or server, in a flexible manner. In other words, a "division of labor" between involved network elements, functions or entities may vary case by case.

Concepts to which the present disclosure refers and to which the present disclosure may be applied, can be summarized as follows:

One particular application of the present disclosure may refer to machine learning aspects. Successfully enabling large scale Machine Learning (ML) requires frameworks, in which large datasets can be used. To increase the amount of data, different entities can collaborate to bring large datasets together. Such a collaboration requires the different entities to have guarantees that their confidential information (i.e., data) will not be publicly revealed.

Another relevant aspect of the present discosure relates to data privacy. Data privacy refers to keeping the records used as part of the training confidential. Confidential data might include, but is not limited to, medical records, credit card information or personal emails and addresses as well as measurements from sensors and industrial processes. Those records might have to be kept private/confidential for multiple reasons: Economic interests as discussed herein may be understood as the process of data collection and curation might be expensive and represent a costly investment, and leaking said information might represent a financial loss. Contractual requirements as discussed herein may be understood as a company handling the data of a client company or private customer might have to fulfil contractual obligations to keep said data private. Regulatory requirements as discussed herein may be understood as legislations like GDPR and CCPA requiring that the privacy of consumer data be protected.

Federated Learning. Federated Learning (FL) as discussed herein may be understood as an ML technique for training an algorithm collaboratively between multiple entities, in which multiple entities (e.g., devices or servers) each hold a part of the training data but do not exchange said data. In other words, FL enables collaborative learning among multiple data owners without exchanging the data. In this setting, the model is sent to data owners, who compute their local updates and send them back to the model owner. Existing techniques for securely exchanging model updates are Secure Multi-Party Computing, Homomorphic Encryption and Secure Aggregation. FL has been used both to avoid expensive data transfers between edge devices and the cloud, and to protect the privacy of the training data.

Trusted Execution Environment as discussed herein may be understood as a trusted execution environment (TEE) as a secure area of a main processor. It guarantees code and data loaded inside the TEE to be protected with respect to confidentiality and integrity. A TEE provides the applications with an isolated execution and their integrity as well as the integrity and confidentiality of their assets. In general terms, the TEE offers an execution space that provides a higher level of security for trusted applications than a rich operating system (OS) and more functionality than a 'secure element' (SE).

TEEs are integrated on several processor platforms from chip manufacturers. The most popular commercially available TEE solution is the Secure Guard Extensions (SGX). SGX is a set of security-related instruction codes that are built into modern CPUs. They allow user-level as well as operating system code to define private regions of memory, called enclaves, whose contents are protected and unable to be either read or saved by any process outside the enclave itself but can be programmatically attested by remote parties.

There are two remote attestation flavours: 1) Elliptic Curve Digital Signature Algorithm (ECDSA) based attestation and 2) Enhanced Privacy ID (EPID) based attestation.

ECDSA-based remote attestation enables third-party attestation via the SGX Data Center Attestation Primitives (DCAP). ECDSA-based attestation with SGX DCAP allows providers to build and deliver their own attestation service instead of using the remote attestation service. This is useful for enterprise, data center, and cloud service providers who need to use the large enclave sizes that are available in the Xeon Scalable processor family, run large parts of their networks in environments where internet-based services cannot be reached, keep attestation decisions in-house and deliver applications that work in a distributed fashion (for example, peer-to-peer networks) that benefit from not relying on a single point of verification.

EPID-based remote attestation enables a relying party to attest an enclave without knowing the specific processor that the enclave is running on. Using this technology requires a platform and for the relying party to have internet access. The online attestation service is created to minimize complexity of handling multiple security versions for a platform with a TCB for SGX.

Collaborative Learning over SGX. proposes a scenario where multiple data owners want to train a model together. The trained model is shared among all the data owners. SGX is utilized because data owners do not trust the cloud provider. During the training process, data owners identify each other first and agree upon one model design and training code. The code is then uploaded to the cloud enclave. Each data owner encrypts its data and uploads it to the enclave. The keys to the data are only shared after the enclave passes attestation.

Trusted execution environments (TEE) may not only preserve the privacy of the data but also the confidentiality of the model during training. In this approach, both the data and model are encrypted with a hardware key to prevent information leakage. The computation of both local and global model updates is performed using trusted (verifiable) code which does not expose the private data of any data owners.

It is also possible that datasets are sold to other parties that may want to use it for their own private training and/or application use case, and/or sell their trained models afterwards. In such scenarios, data owners may want to advertise properties of their datasets to increase the confidence of potential users that may purchase the data. Similarly, potential users would want assurances that a dataset they are purchasing is going to be useful for their purposes. The challenge here is providing these assurances without exposing the private/confidential data to others. Doing so can trivially provide the solution to assurance requirements but will defeat the purpose of monetizing the dataset. Ideally, the participants in these marketplaces, including the marketplace operator, may not necessarily be trusted entities, requiring the assurances to be provided via cryptographic means.

A merkle tree as discussed herein, may be a hash tree, in which every 'leaf' node is a cryptographic hash of a data item and the `inner' nodes are the cryptographic hash of their children. The tree is built by recursively pairing nodes to obtain their parent nodes and continuing until a single root is reached. Showing that a data item is part of the Merkle tree (i.e., providing a membership proof) requires showing that the corresponding leaf node is present in the tree by computing the hashes proportional to the tree height (i.e., logarithm of the number of data items), making it an efficient cryptographic commitment scheme. This membership demonstration includes the necessary sibling node values in the tree, so that the hash root can be computed. The sibling nodes are determined according to the Merkle path of a leaf (i.e., the path from a given leaf node to the root).

Moreover, Verifiable Random Functions (VRFs) as discussed herein, refers to cryptographic primitives enabling the generation of a deterministic output from a given input (known as alpha) and a secret key. The output is indistinguishable from random to anyone unaware of the secret key. The concept is akin to keyed cryptographic hashes; however, VRFs are public-key primitives. Most importantly, the output hash can be verified using a public key corresponding to a secret key.

VRFs are typically composed of four algorithms: (1) a key generation algorithm to produce a secret and a public key, (2) a VRF evaluation (or hash) algorithm that deterministically produces a hash value given a secret key and an input (alpha), (3) a VRF proof generator algorithm that produces a proof based on the secret key and the input, and (4) a verification algorithm that ensure the correctness of a VRF hash of input alpha, given a public key, a proof, an input, and an output hash. It is worth mentioning that the verification algorithm does not require secret keys.

References are now made to the figures. In particular, it is to be noted that identical or like reference numbers used in the figures of the present disclosure may, unless indicated otherwise, indicate identical or like elements, such that repeated description thereof may be omitted for reasons of conciseness.

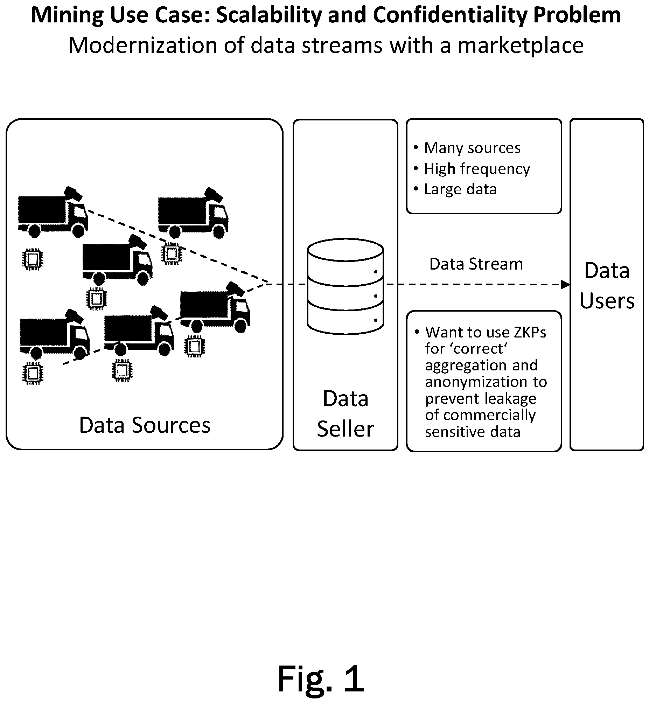

Figure 1 schematically illustrates an example use case, in which a data stream owner monetizes its data in a marketplace or data network. Accordingly, this first scenario relates to monetization in a marketplace, where data sources are related to data such as sensor data of mining equipment. For example, a mining equipment provider may want to obtain correctly sampled data from their mining equipment that is owned and used by one or more mining companies. The data stream owners would like to provide and advertise assurances about their data streams without losing the privacy/confidentiality of their data. Similarly, the potential data users would like to have assurances about the data stream before they purchase or subscribe to it.

In particular, in order to convince potential users of the data stream (e.g., data buyers in a Data Marketplace), a data stream owner must show the value of the data stream he owns. However, naively giving away the data stream to other parties defeats the purpose of monetizing by selling it to other entities. As a result, the value of the data stream needs to be shown without exposing it.

For example, before a user subscribes to a data stream to use the data with a private application goal (e.g., private model training), the user should be able to tell whether the data stream is going to be useful for his own purposes. There are also incentives for the data stream owner to skew the data, such that more users would find it useful and subscribe to the stream. However, this should be avoided or prohibited by the described method and system.

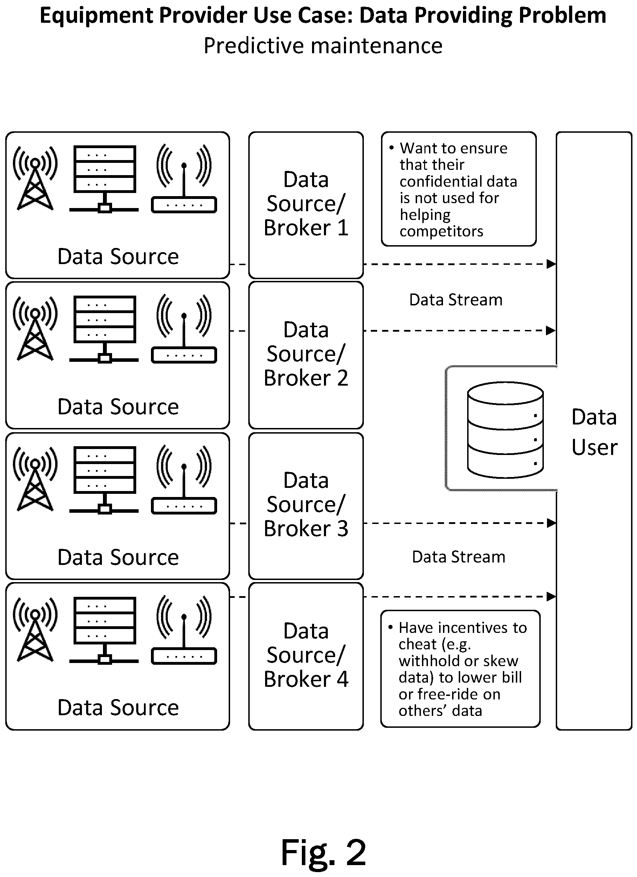

Figure 2 schematically illustrates another example use case, in which a manufacturer would like to provide predictive maintenance on its customers devices, and thus, wants to receive the data streams. In this scenario, namely, predictive maintenance for equipment providers, an equipment provider might want to receive data of the performance of their devices in the real world. However, the manufacturer's customers (e.g., telecom providers) are very reluctant to share this information due to the sensitivity of their own customers data. Furthermore, they may also be concerned that their data is being used by the manufacturer to help their competitors (e.g., telecom provider A is not willing to share data, because it would be used to improve telecom provider B network). As a result, they have incentives to interfere with the data that is being shared with the manufacturer (e.g., withhold it) and/or exploit the intelligence produced by the manufacturer with other providers' data.

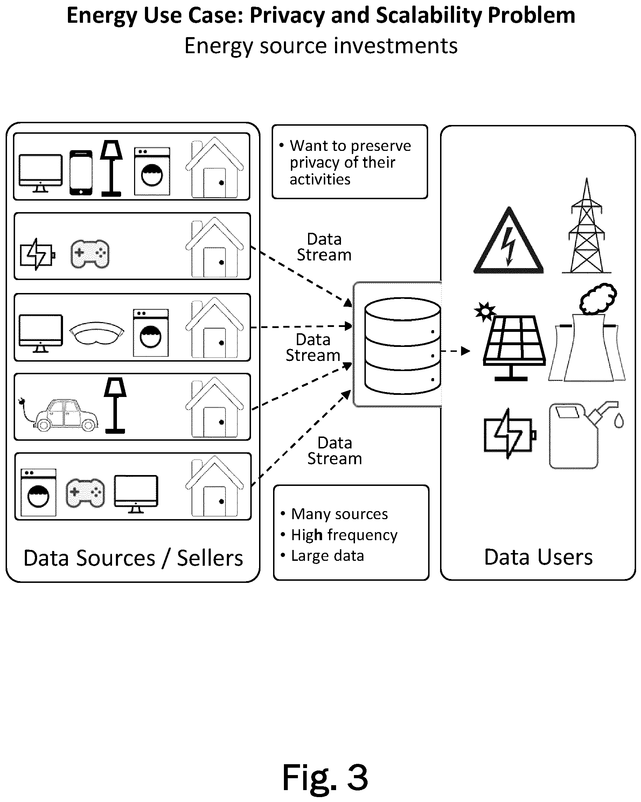

Figure 3 schematically illustrates yet anorther example use case, in which an energy provider would like to obtain household electricity usage data to make informed decisions on its investments. In this scenario, namely, energy usage and investments, energy providers and grid operators want to observe the energy consumption of households (e.g., which devices are used when, and with what frequency) as well as how much sustainable energy users produce (e.g., by solar panels). This information is important for capacity planning and energy source investments (e.g., if daily usage seems to be high, investing in solar energy may be more meaningful). However, household owners are concerned about the privacy of their activities. Moreover, the number of data sources (e.g., households, devices) and their frequency of data generation will certainly overwhelm the data collector (i.e., the energy provider).

The above use cases all suffer from common problems of scalability, confidentiality and privacy, and the present disclosure generally seeks to provide a method to help a data stream owner to provide the data stream to potential users in a scalable, confidential and private way.

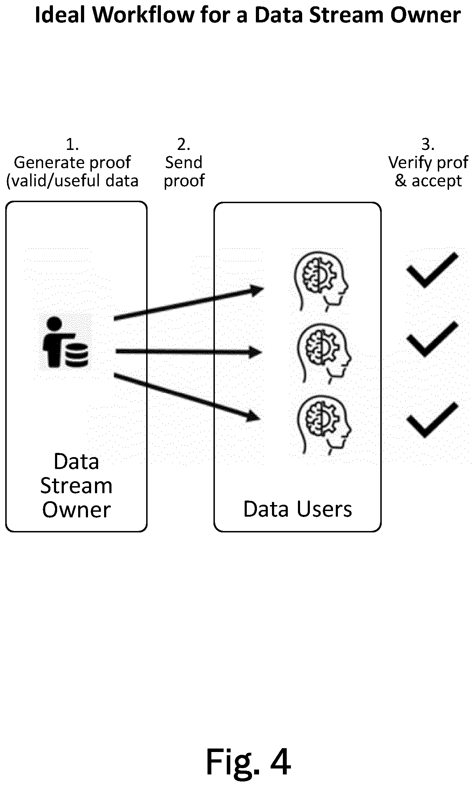

Ideally, the data stream owner would produce a proof of the properties of the data stream, send that proof to potential data users, who would then verify the proof to be convinced of the properties of the data stream, as shown in Fig. 4. But, there are two aspects to consider:
1) Unknown set of useful properties of a data stream: One example of these useful properties is the validity or internal consistency of the data, whether it is meaningful and/or feasible, such as age in years being less than 120 or height being less than 3 meters for individual health data. Another example may be informational properties of the data stream, such as the statistical mean, median, percentiles and/or distribution. However, many of these properties may not be easily known and exhaustively enumerated, because the utility of a data stream often depends on the application use case as well as the properties of the data stream itself.
2) Handling large-volume streaming data: The data streams usually require almost real-time processing, requiring practical considerations about performance and cost. The performance is important, because the timeliness of the data stream may alter its value (e.g., a recent data stream may be more useful than an old one). Furthermore, there may be many data sources contributing to the stream at a high rate, the data sources or recipients may have limited network bandwidth and the size of the data may be large. Similarly, the cost plays a role, because generating a proof of a data stream should not be more expensive than the subscription price of the stream; otherwise, there is no point in generating the proof.

Addressing these aspects simultaneously is an open problem. Sampling, as will be described later, can provide a solution with the necessary considerations. The natural question that arises is then: how can a data stream owner prove to potential data users that the provided sample was created correctly.

Figure 4 schematically illustrates a workflow, whereby the data stream owner generates a proof of property and sends it to others, who then verify the proof;

Any solution that is targeting the problem of correct sampling will have to also consider the fact that stream data owners may or may not control the data sources that contribute to the data stream. As such, the solution would need to ensure that the data stream owner cannot skew the sample towards its own benefit by manipulating the data collection process. Such manipulation may be done by adding/hiding data sources and/or dropping the collected data (i.e., omission of data).

Today there is not much related work on providing "proofs for correct sampling for streaming data". Using Zero-Knowledge Proofs (ZKPs), a "prover" party can prove to another "verifier" party that a statement is true without revealing any other information about the statement. ZKPs have seen an increased interest in the last couple of years because of the popularity of cryptocurrencies and usage of ZKPs in their scalability solutions. As a result, technical advancements are made to improve their performance and usability. Technically speaking, ZKPs can be utilized to prove the integrity and correctness of a computation, including the sampling process. Similarly, if a data owner can enumerate the useful properties of her dataset, she can create separate ZKPs proving that each of these properties hold for her dataset, without revealing the contents of the dataset to anyone. However, despite the interest and recent advances, the performance of ZKPs for large datasets as well as arbitrary computations remains very low, which in turn makes them difficult for streaming data. ZKPs can also be orthogonal to the "proof-of-correct-sampling", such that creating ZKPs can still be done in a feasible way for some additional properties because the sample will be much smaller than the original dataset.

There may also be a data exchange protocol with a free sample (DEFS). In DEFS, a dataset owner first creates a series of encryption keys from a seed, each corresponding for each data item in the dataset, and builds a Merkle tree out of those encryption keys. Then, the dataset owner encrypts the dataset items with their corresponding encryption keys and creates another Merkle tree from the encrypted dataset items. These encrypted dataset items are then uploaded to a storage location (e.g., an IPFS, web server), where potential buyers can download the encrypted dataset. The dataset owner also employs a smart contract on a decentralized blockchain with the two Merkle tree roots (i.e., encryption keys and encrypted dataset items). A potential dataset buyer downloads the encrypted dataset items and triggers the smart contract to request a sample by asking for the decryption keys at certain locations in the Merkle tree of the encrypted dataset. At this point, the dataset owner reveals the encryption keys at those locations along with their Merkle paths to the potential buyer, such that the buyer can make sure that the keys belong to the Merkle tree of the encryption keys. If they check out, the buyer decrypts the requested dataset items to obtain a sample of the dataset and checks the quality of the sample according to her own application logic. If the sample is deemed acceptable, the buyer initiates the protocol to buy the dataset by locking enough funds in the contract. Afterwards, the dataset owner reveals the seed used to generate the encrypted keys to get paid for the dataset. The main goal of this line of work is to provide a dataset sample to potential buyers within a decentralized data exchange protocol. As such, it works only for static datasets and not streaming data. Additionally, its focus is on the supporting protocol for the transactions of a dataset exchange.

There may also be a system NIZK, in which they focus on creating non-interactive ZKPs within a TEE. Their system is based on an interpretable language (Lua), whereby the interpreter is compiled into a binary and shared by all users. The users then supply a script as well as public and private input, such that the script runs inside the TEE and produces an output that is included in the attestation report. The attestation report is then checked by the user using EPID remote attestation. The attestation report including the script execution output and the corresponding attestation result that is signed is then used as a non-interactive proof for other users to verify the correctness of the computation.

NIZK uses TEEs and remote attestation for proofs. Their solution is focused on scalability of blockchains and privacy-preserving smart contracts. As a result, their attestation process is done per script that needs to be executed, making it unsuitable for streaming data. Furthermore, it is not clear how NIZK can support large datasets due to the size limitations of the Lua interpreter as well as EPID-based attestation being only available for servers with small EPC sizes.

There may also be a dataset management system for collaboratively creating, reviewing, updating and evolving ML datasets. Such datasets can be provided to others with fees and licenses. The system provides mechanisms to propagate changes and updates made to a parent dataset to its children (i.e., other datasets using this dataset). The system can present dataset items in a variety of views, such that users can identify issues in the data. These dataset items may have additional metadata that can reflect certain properties of the item that have been reviewed by users (e.g., images being associated with various class labels).

Although known approaches may use the term "sample", it sometimes refers to a "dataset item". The term "verification" sometimes refers to the "reviewing and validating" of the attached metadata. For example, a dataset to be used for training an ML model to recognize objects may contain images of various animals. These images would then be labeled with the corresponding reviewed and validated animal name (e.g., a dog picture being labeled as 'dog').

In contrast, the present disclosure refers to the term "sample" as the "subset of dataset items from a larger dataset", produced via "statistical sampling" methods. The verification is then the check of the proof that shows that the subset of dataset items was created correctly and honestly. In other words, the present dislcoure is about "proving the correct selection of dataset items to form a subset of a dataset" instead of the content or metadata of an individual dataset item.

Sampling is a standard statistical tool used in many fields, including big data analytics, stream processing and approximate computing. By using a representative sample, these approaches aim to reduce the resources required to process large amounts of data, to process more data with a fixed number of resources or to process the data within a shorter time without losing much accuracy of the result that would have been obtained by processing all the data.

Thus, sampling is a well-suited tool to alleviate the concerns that need to be considered for streaming data: A representative sample can address the challenges described in which scalability problems may arise due to limited network bandwidth, increased data size, high frequency of data generation and large number of data sources. Furthermore, providing a representative sample of the data stream can allow data users to evaluate the sample according to their application requirements without violating the data stream owner's confidentiality and privacy. Enabling such a custom evaluation is especially useful due to the infeasibility of producing proofs for an unknown set of useful properties.

Because the stream owner is in possession of the data stream that can be supplied to potential users, some users may be reluctant to trust the data stream owner not to interfere with the sampling process of the data sources that will produce the data. The present disclosure proposes a method to assure the potential users that the sample of data sources (and hence, their produced data) was created correctly.

Note that a further solution to the sampling problem is to collect all necessary data at a central location and perform sampling there. However, this may not always be possible due to the large volume of the streaming data, distributed deployment of data sources and the cost of transporting the data to the central location only to drop most of it (i.e., because the sample will be much smaller). As a result, this alternative mayin some cases be costly to pursue. Furthermore, this solution would require the central party to produce proof, such that the potential users can determine that this central sampling process is not biased. In other words, sidestepping the proposed solution may be costly and one will have to solve the issues regarding correctness of the sampling as well as confidentiality and privacy of the data sources targeted in the present disclosure

At a high-level, the present disclosure employs Verifiable Random Functions (VRFs) at each data source, such that each data source can independently evaluates the VRF with their own secret key and determines whether they are selected in the sample. If so, they not only send their data as part of the stream but also the proof that the selection in the sample was computed correctly. As a result, the recipients of the sampled data and the proofs (i.e., potential users) can check the proofs with the corresponding verification keys of the sources, enabling them to obtain assurances that the sample is computed correctly and is representative of the data stream. Given such a data sample, they can check the sample and evaluate whether it satisfies the requirements of their use case or application. Similarly, each data source that is not selected to be included in the sample sends the proof that they are not selected (but not the data). Having this verifiable sampling process distributed among the data sources avoids the extra costs of transporting data to a central location and processing it there.

A stream owner may still want to interfere with the sampling process to skew the sample data to her favour to convince potential users (e.g., dropping data packets selectively). Such potential interference can be prevented and the potential data users can be protected, because at least one of the following features: 1) each data source privately evaluates the VRF without involving the stream owner, 2) each data source sends their proofs of their VRF evaluation (even when not selected in the sample and not providing data), and 3) the verifiers (i.e., potential users) can keep track of such proofs to determine whether a data stream owner is untrustworthy or the stream is too unreliable, allowing the potential users to avoid obtaining the data stream in either case.

Note that the sampling process according to the present disclosure, in some cases is not a one-time event that will help with the potential users decision to receive the data stream and use it. Even after the decision is made to use the data stream, the sampling process can continue to help with 1) the scalability of the data sources and receivers, and 2) detection of any changes in the reliability and utility of the data stream. For example, in the data marketplace scenario, subscribers to a data stream may only want a subset of the data for scalability and/or pricing reasons and/or may still want to continuously assess the quality of the data stream (and make further decisions to stop their subscriptions). Similarly, providers may want to continuously assess the reliability of a data stream received from one customer in order to further evaluate and adjust its predictive maintenance operations. As a third example, a research institute using a data stream from air quality monitors provided by a municipality may detect a drop in received data and proofs, which may indicate network infrastructure problems in the regions (e.g., radio towers breaking down) and/or sensor hardware issues (e.g., batteries need replacement), which in turn can be used to notify the data stream owner to take corrective actions.

In an exemplary network according to the present disclosure, there may be the following actors:

Data source: A data source produces data that becomes part of the data stream. There can be multiple data sources. Some examples are sensors in a factory or individual users in a crowd sourcing system.

Data stream owner: A data stream owner may want to provide its data to other users. However, providing the entire data stream as it is may not always be possible either due to scalability concerns (e.g., low network resources, large number of data sources) or acceptable (e.g., confidentiality will be violated, providing all data defeats the purpose of monetization). As a result, part of the data will be provided that can work as a probe about the properties of the data stream. The data provided will be generated by a randomly selected sample of data sources, producing a data sample. This data sample can be used for further decisions (e.g., fully subscribe to the stream, continue using such samples for scalability or pricing).

Data user: A data user may want to obtain a data sample from the data stream owner's data sources. He requires assurances that the sampled data sources were correctly chosen (i.e., randomly selected), and data sources are not added or removed at runtime (i.e., to skew or manipulate the properties of the sampled data).

One or more of the following assumptions regarding the scenario and actors may be considered for some impolementations:
1) Each data source produces data correctly (e.g., sensing is correct) (via trusted hardware and/or other cryptographical schemes). That means, even if the data stream owner controls the data source, he cannot interfere with the correctness of the data production. He can only deny service (e.g., by dropping packets).
2) Each data source signs its produced data with its private key that can be checked with the corresponding public key.

Given the above actors and assumptions, the goal is to obtain a sample of the streaming data generated by multiple data sources along with the proof that the sources contributing to the sample were correctly and honestly picked (i.e., randomly selected).

In the following the protocol according to the present implementation is described. Each data source has a secret key (SK) and a corresponding verification key (PK) to be used for their VRF evaluation for sampling. It can be the case that these keys are the same keys used for signing data (public key == verification key, private key == secret key), but they do not have to be. In the following the protocol is described as if they are the same.

When the data stream owner wants to provide the data to potential users, he declares his intention. This declaration can happen on a data marketplace/exchange, a decentralized system with smart contracts and transactions via press releases, via customer relations and through other means of communication. The exact nature of this declaration is dependent on the use case and outside the scope of this invention. There may be additional supporting protocols that will deal with the actual purchase, subscription, usage and delivery of the stream data. These supporting protocols are also outside the scope of the present disclosure.

The data stream owner declares one or more of the following information and commits to them via his own signature (e.g. via the data exchange protocol):
1) Number of data sources as well as their public keys (either as the hash of a list of public keys, or a root of the Merkle tree built using these public keys) ;
2) The sampling probability and the algorithm (also known as the "lottery");
3) The update mechanism of the public seed (i.e., alpha).

The data production is divided into epochs (also referred to as slots or time-slots). Each data source at each epoch will produce some data. The public input to the VRF is the epoch representation value alpha.

There may be many ways to obtain the epoch representation in various embodiments depending on the implementation and the use case. The epoch change may be incremental by fixed and pre-defined amounts. For example, it might be updated every x second, such as 10:30:00, 10:30: 10, 10:30:20 etc., where x is 10. Note that there may be other ways that the data sources synchronize about the alpha value for a new epoch. For example, the data sources may be part of a decentralized blockchain and reach consensus for the next value. It could also be the case that a separate authority (e.g., a random oracle) announces the next value to all data sources, or each data source contacts this authority to obtain the updated epoch value. This value might correspond to the hash of the previous data sample and/or to other arbitrary values determined by the authority. Depending on the use case, there may be other ways of obtaining and synchronizing this value among the data sources.

At each epoch, each data source may use the same determined input (i.e., alpha) as well as their own secret key (SK) for the VRF evaluation and obtain a proof pi, such that pi = VRF_prove(SK, alpha).

Each data source will then obtain a random value that beta, such that beta = VRF_proof_to_hash(pi). The beta value will be used by the data source to evaluate whether it has been selected to be included in the sample in this epoch according to the sampling probability and algorithm declared by the data stream owner. This evaluation may also be refereed to as the "lottery".

The sampling probability can be adjusted according to the number of data sources, the rate at which they produce data as well as the use case. The lottery algorithm entails that beta may be less than or greater than a certain value when interpreted as a big number. Alternatively, the number of zeroes in its binary representation may satisfy some criteria. These conditional checks in the lottery algorithm are adjusted and set by the data stream owner according to the range of the random number (i.e., beta) and the sampling probability, such that one can compute an expected number of data sources in the sample by multiplying the total number of data sources and the sampling probability.

If a data source determines via the lottery algorithm that it is to be included in the sample, it sends its data, its public verification key (or an index to a list of keys) as well as the proof (i.e., pi) showing that it was supposed to be included in the sample. This proof may be referred to as an "inclusion proof' because it corresponds to the inclusion of a data source (and its data) in the sample.

The data users (i.e., recipients of the data and proofs) act as verifiers and check one or more of the following:
1) For each data source received in the sample, the recipients check whether the public key is included in the declared list of public keys by the data stream owner. They do so either by just checking the signed list of the public keys or by obtaining the membership proof of the corresponding public key (i.e., Merkle path) from the data stream owner. If the public key is not included in the declared list of data source public keys, the data source and its data are ignored.
2) For each data source received in the sample with a valid and included public key, the recipients compute the validity of the proof is_valid = VRF_verify(PK, alpha, pi) for the current epoch (i.e., with the corresponding alpha value). If the proof is valid, then they compute beta_prime = VRF_proof_to_hash(pi) and evaluate the same lottery algorithm used by the data sources to see whether this data source was indeed selected to be in the sample. In other words, they check that beta_prime satisfies the same conditions as the (data source's) beta value. Any data source and its data not supposed to be in the sample are ignored, either due to an invalid proof or an unsatisfying beta_prime value.

If the data stream owner was using other means to update the public input (i.e., alpha) to be used in the VRF evaluation in the next epoch, he does so before the next epoch starts. If not, the alpha value is updated by each data source according to the pre-defined update mechanism (e.g., if time dependent, it progresses to the next pre-defined value).

Note also that preferably the same public input alpha is utilized by the recipients to verify the proofs. The recipients obtain the public alpha value similar to the data sources and only use the alpha value belonging to the current epoch. In other words, if a valid proof arrives that does not belong to the current epoch (i.e., it may still be valid because it was using an earlier/later version of the alpha value), it may be regarded as an invalid proof.

Alternatively or additionally, each data source can send the alpha value they use along with the proof, in a tamper proof way (i.e., signature on the value). The recipient will then check that the alpha value is not tampered with by checking the signature and then use the alpha to verify the proof. Note, however, this additional signature may create extra computation and network overhead at the data sources. Note also that the use case may require timely processing of the streaming data; thus, any delayed packets belonging to an earlier valid epoch can be still considered invalid.

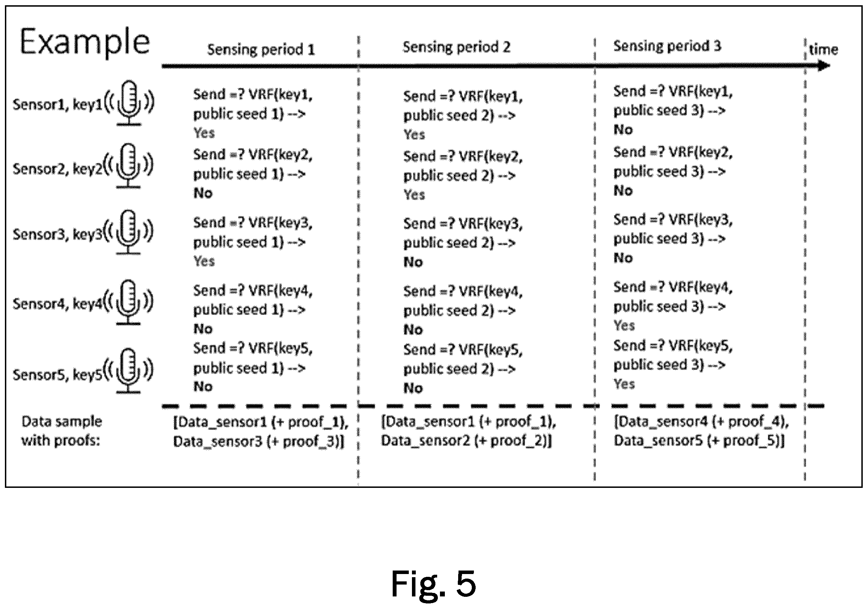

Figure 5 shows an example of how the data sample is produced with 5 data sources (here, sensors) along 3 epochs (here, sensing periods). Here, the sampling probability and lottery algorithm is declared to be about 40% for illustration purposes. In each sensing period, each sensor will evaluate the VRF with the given public seed (e.g., sensing period number) and its own secret key. The result will determine whether the sensor's data will be included in the sample. In the first sensing period, sensor1 and sensor3 are selected by the lottery allgorithm, and thus, send their data along with their proofs regarding the VRF evaluation of the lottery. Similarly, in the second sensing period, sensor1 and sensor2 are selected. Finally, in the third period, sensor4 and sensor5 are selected to be in the sample.

Note that due to the probabilistic nature of the selection process, there may be epochs with more or fewer data sources selected in the sample for that epoch. However, in the long term, the average number of data sources in the sample will converge to the expected number of data sources (i.e., total number of data sources times the sampling probability).

Note that it is also possible to evaluate the lottery once and use its result for multiple epochs. For example, if the data stream consists of data sources producing data at a high rate (e.g., 10KHz), the lottery can be done once per 5 seconds, such that a data source would send its data until the next lottery evaluation and the proof would be considered valid until then.

An alternativ or additional feature is the omission detection. It may be possible that some data sources may not be able to send data because either they have unreliable data production (e.g., overloaded hardware) and/or unreliable network connectivity (e.g., intermittent coverage of wireless signals). It may also be possible for some data sources to be malicious, such that they may deliberately not send their data when they are supposed to (i.e., if the VRF evaluation with their secret key and the lottery algorithm dictate). It is also possible that a data stream owner may want to interfere with the sampling process to skew the data sample to make it look "better". In all these cases, some data as well as the corresponding proofs may be missing, and thus, omitted.

Detecting such omissions may be important because it will enable a potential data user to assess the quality of the stream (and not only the quality of the data supplied in the sample). As a result, the potential user may not proceed with the reception of the data (e.g., a user in a marketplace may not subscribe to the data stream, providers may exclude a customer's data sources from its own usage).

These omissions may be detected and handled via two solutions:
1) Exclusion proofs: Each data source, regardless of whether the VRF evaluation leads to being included in the sample or not, sends their proof (i.e., both inclusion and exclusion proofs are sent). The verifiers (i.e., data users) check the proofs and evaluate the lottery algorithm, and only accept the data from the sources that were supposed to be in the sample (i.e., inclusion proofs). If a data source was supposed to be in the sample but it didn't send data, the verifiers can raise a flag. In addition, the verifiers also keep track of how often an exclusion proof was missing from each data source as well as the total of missing exclusion proofs. If a data source does not continuously send its proof (inclusion or exclusion), then the verifiers can become suspicious of malicious (e.g., deliberate omissions) or unreliable activity (e.g., unreliable data sources and/or network connectivity).
2) Periodical timed release: At a much coarser timescale than the data production (e.g., every 1000 epochs), each data source reveals their secret key. For each previous epoch, the verifiers evaluate the VRFs of each data source with the corresponding secret key and check the lottery algorithm. If the data source was supposed to send data in that epoch, the verifier then checks whether it had received that data in that epoch from that source. If not, the verifiers can become suspicious. Similarly, if a data source does not reveal its secret key, the verifiers can become suspicious. After revealing their secret key, the data sources create a new secret key for their VRF evaluations (e.g., via Key Evolving Signatures) for future epochs. The data stream owner also updates the declared public key list (or the Merkle tree) with the new public keys.

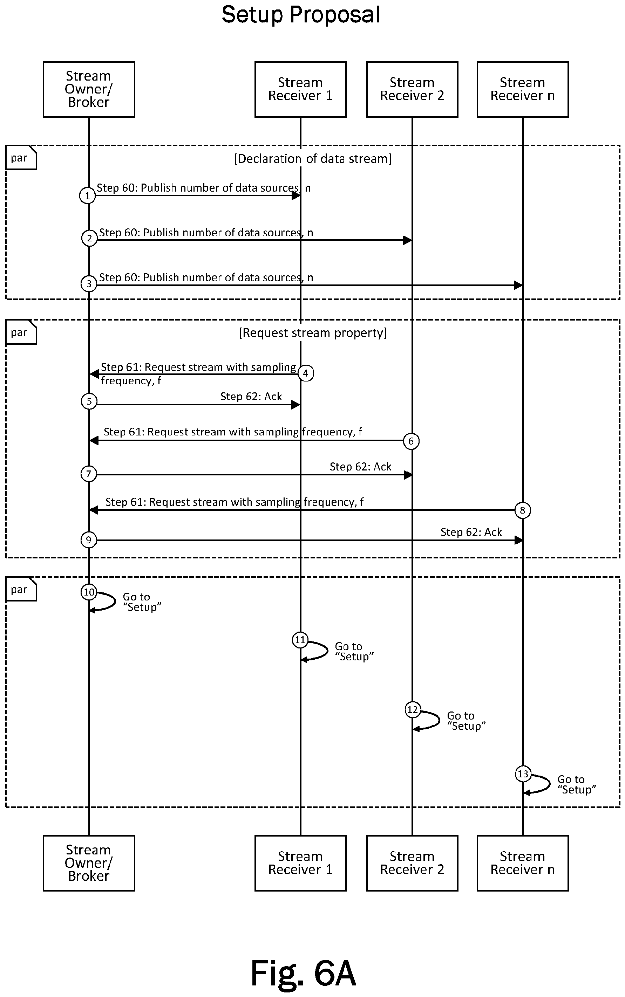

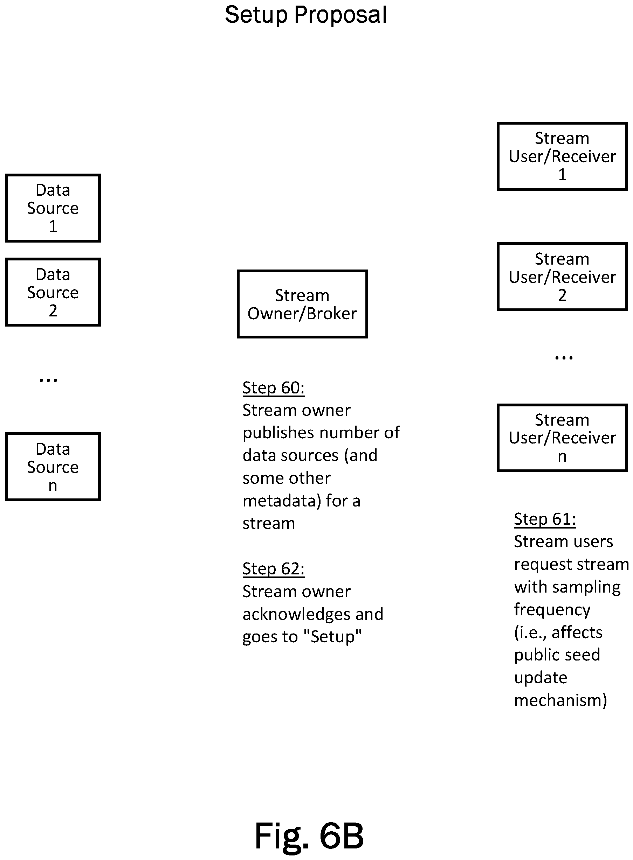

Figure 6A and 6B schematically illustrate a proposed setup between a stream owner/broker and a plurality of stream receivers/users (stream receiver 1, 2, ... m).

In step 60, the stream owner/broker may publish the number of n data sources (and additional metadata) of a data stream.

In step 61, the stream receivers/users may request the stream with a sampling frequency f (i.e., affects public seed update mechanism). After a stream receiver/user receives and/or obtains the published number of data sources from the the stream owner/broker, the stream receiver/user may send a request with a sampling frequency to the stream owner/broker.

In step 62, the stream owner/broker may acknowledge and in the next step move to "Setup". Moreover, after the stream owner/broker receives the stream with a sampling frequency from at least one stream receivers/users, the stream owner/broker may send ACK (Acknowledge character) respectively to stream receivers/users and go to "Setup".

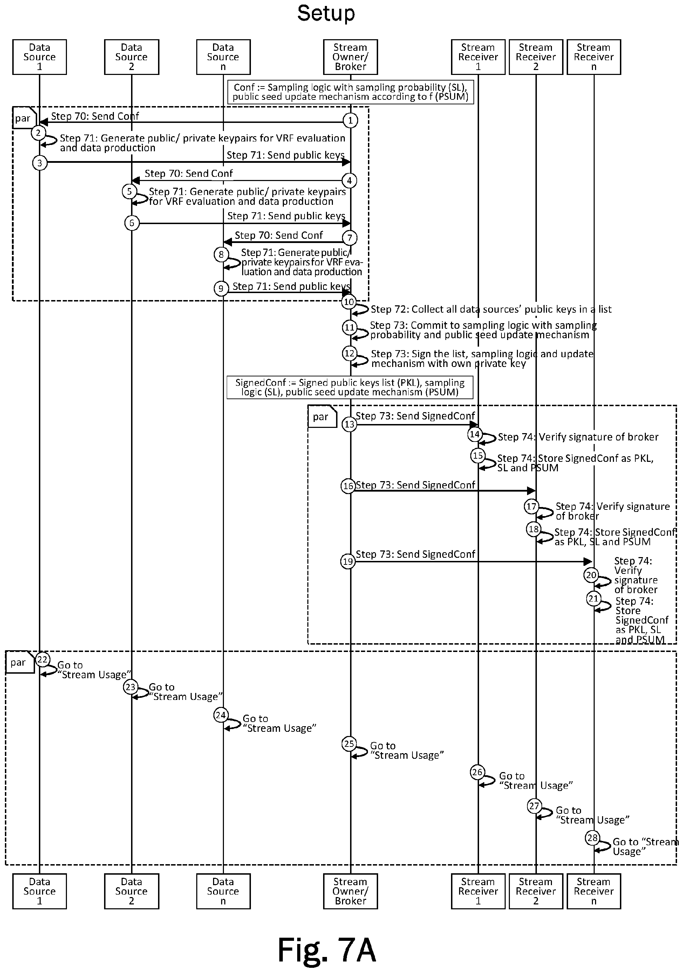

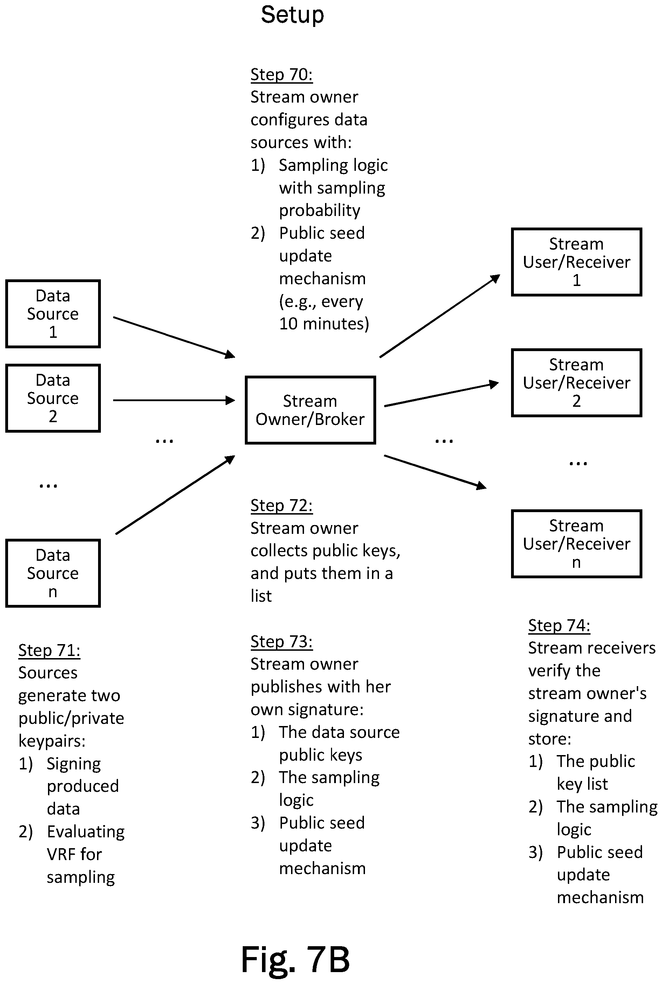

Figure 7A and 7B schematically illustrates the setup. In step 70, the stream owner/broker may configure data sources with: 1) sampling logic with a sampling probability; 2) public seed update mechanism (e.g., every 10 minutes). In this step, the stream owner/broker may send a configuration signal to at least one data sources respectively, wherein, the configuration signal includes 1) sampling logic with sampling probability; 2) public seed update mechanism (e.g., every 10 minutes).

In step 71, data sources may generate two public/ private key pairs: 1) signing produced data; 2) evaluating VRF for sampling. In this step, each data source may generate two public/ private key pairs: 1) signing produced data; 2) evaluating VRF for sampling on receiving the configuration signal from the owner/broker. After that, each data source may send the generated public key to the stream owner/broker.

In step 72, the owner/broker may collect public keys, and may put them in a list. In this step, the owner/broker may receive public keys from at least data sources and may put them in a list.

In step 73, the owner/broker may publish with her own signature: 1) the data source public keys; 2) the sampling logic; 3) public seed update mechanism. In this step, the owner/broker may commit to = sampling logic with sampling probability, and/or public seed update mechanism, and may sign the public keys list, sampling logic and/or update mechanisam with its own private key. The signed public keys the list (PKL), sampling logic (SL) and update mechanisam with its own private key (PSUM) may be included in a SignedConfiguration signal. Then the SignedConfiguration signal may be send to each of stream users/receivers.

In step 74, stream users/receivers may verify the stream owner's/broker's signature and store: 1) the public key list; 2) the sampling logic; 3) public seed update mechanism.

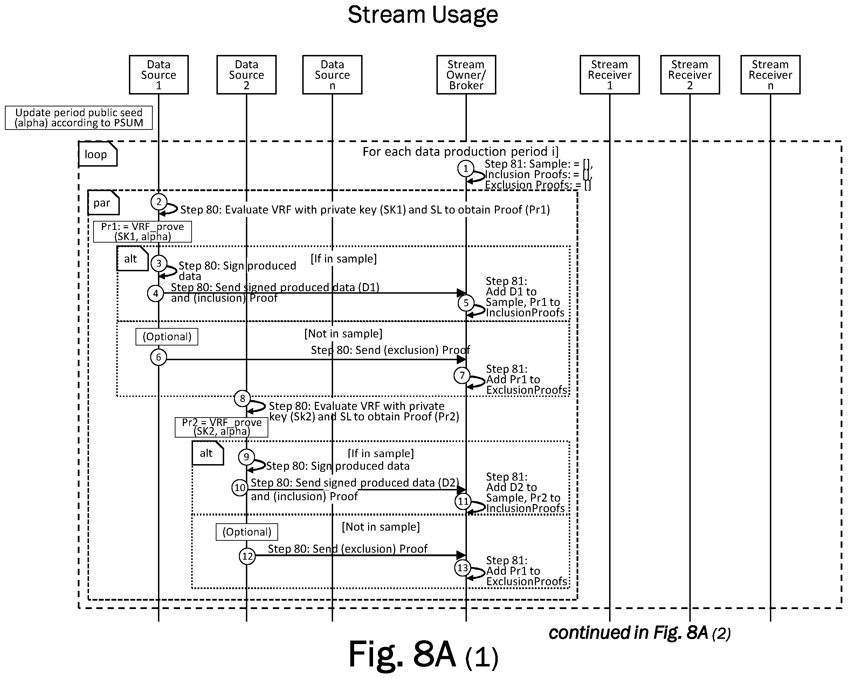

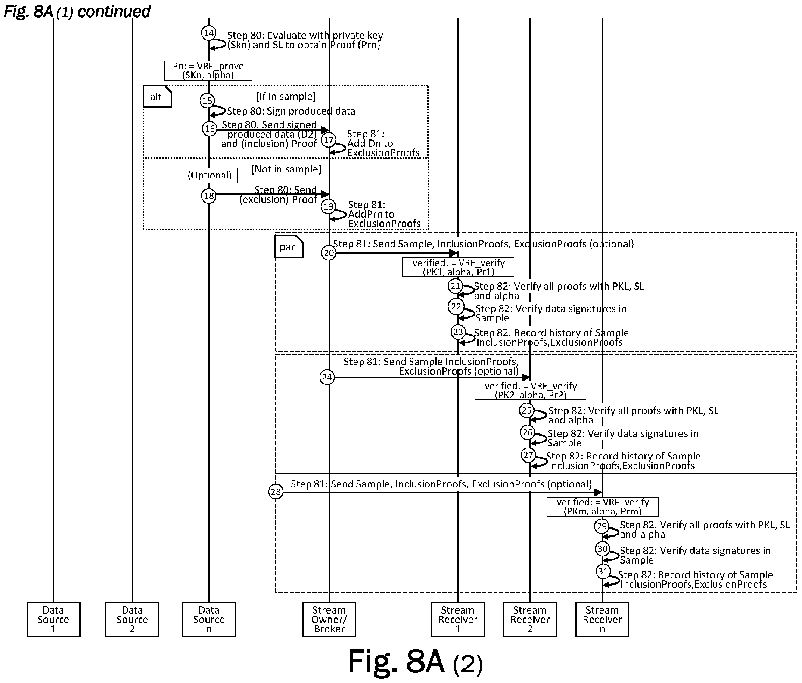

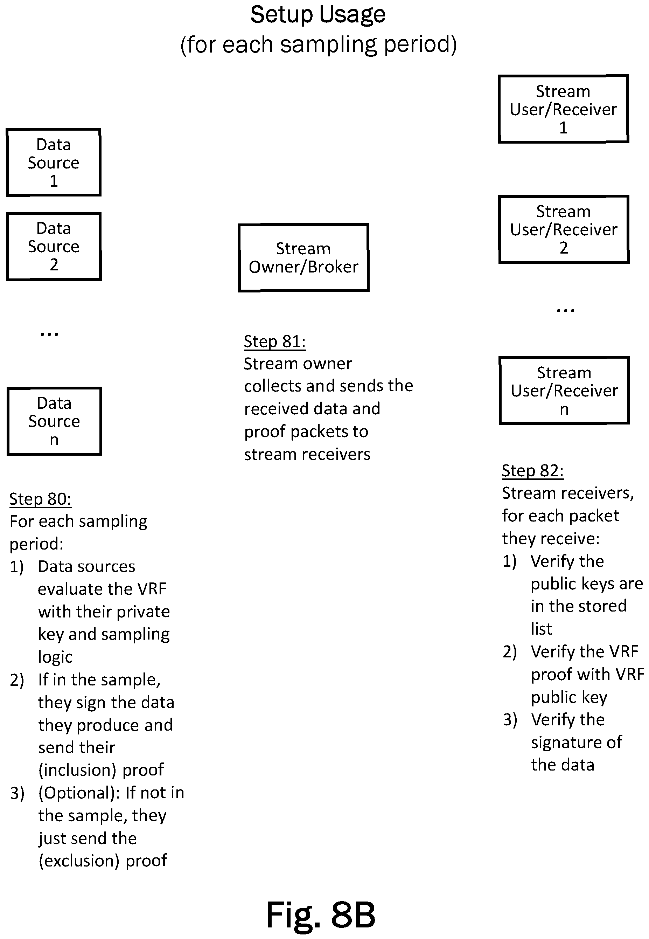

Figure 8A(1), 8A(2) and 8B schematically illustrate stream usage for each sampling period. In step 80, for each sampling period: 1) data sources may evaluate the VRF with their private key and sampling logic; 2) if in the sample, they sign the data they produce and send their (inclusion) proof; 3) optionally, if not in the sample, data sources send (exclusion) proof.

In step 81, the stream owner/broker may collect and send the received data and proof packets to stream users/receivers.

In step 82, for each packet the stream users/receivers may: 1) verify the public keys are in the stored list; 2) verify the VRF proof with VRF public key; 3) verify the signature of the data.

As a result, providing a Proof-of-Correct-Sampling for streaming data as herein proposed, increases confidence in data users as well as enable data stream owners to increase their utilization of their data stream (e.g., monetization, creation of predictive maintenance intelligence, optimization of internal operations).

In one practical implementation of the described systems, multiple data sources are provided and a single data sink as well as sanity checks regarding the sampling probability (lottery) evaluation (i.e., by keeping track of the sample size, and comparing it with the sampling probability and the number of data sources). This implementation exemplary uses Elliptic Curve Cryptography as the underlying public/private key scheme with Edwards25519 curve (EDWARDS25519) with SHA512. The proof size (i.e., pi) is 80 bytes, whereas the secret key size (i.e., SK) and the verification key (i.e., PK) sizes are 32 bytes each.

In one implementation of 100s of VRF proof generation and verifications, the default VRF hash using SHA512 takes about e.g. 0.85ms. VRF proof computation took about 320ms. Note that these proof computations are performed by each data source in parallel in each data production epoch. On the other hand, VRF proof verification by the data sink (i.e., the recipient of the data sample and proofs) would take about e.g. 230ms per proof (I.e., per data source in an epoch). Even though such verification process may look costly, it is an embarrassingly parallel process and can be easily scaled out horizontally onto multiple servers (e.g., running on the cloud). Also note that the data sink is actually a potential data user and thus, would probably have the necessary computational power to handle the sample data (and possibly the entire data stream).

In the following a comparing of solutions for omission detection is described.

The criteria to use exclusion proofs or periodical timed release depend on at least one of (preferably all of) the following factors:
1) N: The number of data sources
2) S_proof: The size of the proof
3) S_data: The size of the data
4) S_pk: The size of the verification key
5) S_sk: The size of the secret key
6) P: The sampling probability
7) T_sk: The key release period

Data sent with only inclusion proofs: N * P * (S_data + S_pk + S_proof);
Data sent with inclusion and exclusion proofs: N * P * S_data + N * (S_pk + S_proof);
Data sent with inclusion proofs and timed release of keys: N * P * (S_data + S_pk + S_proof) + N * S_sk / T_sk;
If the sample size is relatively small (e.g., 1%), the overhead of sending exclusion proofs may be too much. If the amount of data each data source sends is large, then the overhead of the exclusion proofs may become negligible. Note that instead of the actual verification key (PK), the data sources can also send the index of the verification key in a list, which will limit the S_pk to 4 or 8 bytes (instead of 32 bytes).

The periodical timed release frequency would be relatively low; thus, the overhead of sending the secret keys from all data sources may be low. On the other hand, all verifiers will have to reevaluate the VRFs for all data sources with the released secret keys for the entire earlier period (i.e., T_sk epochs), which may create non-negligible computation overhead.

Note that this verification process is embarrassingly parallel and can be parallelized via multiple threads and/or multiple servers (e.g., in a cluster and/or cloud environment). Note also that this verification process can be outsourced to a trusted third party (e.g., cloud provider) or can be performed within a Verifiable-Computation-as-a-Service (VCaaS), whereby the service checks these proofs on behalf of the recipients and produces a single proof that all data source proofs were correctly checked. This VCaaS can be based either on a Zero-Knowledge Proof or on guarantees provided by trusted hardware or Trusted Execution Environments (TEEs), such as SGX (see NC327989: Verifiable Compute as a Service with a Trusted Execution Environment for Static and Streaming Data).

Witrh regard to inclusion proofs, one can imagine that if a data source is sharing data, then it can be implicitly assumed that their VRF and lottery evaluation indicated that they should contribute to the data sample. However, such an assumption is not always valid for at least two reasons, requiring the usage of inclusion proofs. First, the data stream owner may want to ensure only the randomly selected data sources contribute to the data sample, such that no more data than needed gets exposed to the potential data users (e.g., compromised/manipulated data sources). Second, the data stream owner may try to manipulate the data sample. Recall that we assume the data production at the source is correct. However, the data stream owner can still try by making more data sources supply data (e.g., inject more data to skew the sample), and the recipients would not be able to tell the difference. Inclusion proofs ensure that only the sources that won the lottery supply the data for the sample, addressing these concerns.

With regard to the selection of public input alpha it is noted that the selection of the public input (i.e., alpha) for the VRF evaluation is important because it affects how each data source is going to determine whether they are going to be included in the sample and whether potential data users can correctly verify the proofs. We have described the protocol, such that the alpha value is updated at each epoch with a pre-determined procedure (e.g., time-dependent, data stream owner synchronizing). Such a scheme, however, requires additional analysis regarding the data stream owner's capabilities in interfering with the sampling process (see section "Omission detection"). Note that it is assumed in some cases that the data production process is ensured to be correct via trusted hardware and/or various cryptographic schemes, such as commitments; thus, the only thing that the data stream owner can do to interfere with the sampling process is to censor certain data sources and/or drop certain data.

Here, there are two cases to consider:
Case 1: The data stream owner does not have access to the VRF secret keys of individual data sources. An example of this case is a crowd-sourced data generation system, where the data stream owner acts as the coordinator/broker but does not necessarily control the individual data sources and their secret keys. As a result, the data stream owner cannot pre-evaluate the lottery algorithm to determine beforehand which data sources will be part of the sample in a given epoch and cannot individually target them (i.e., drop their packets from the sample to skew the sample).

On the other hand, each individual data source can perform this pre-computation on when they will be part of a sample and can deliberately not send data (and proofs) to interfere with the data in the sample. First, it is pointed out that such data sources would probably be incentivized to participate and send their data (e.g., token rewards). Second, a single individual data source may not be able to affect the resulting sample much.

In any case, this omission problem can be addressed by requiring exclusion proofs or periodical timed-release of keys: when a data source is not part of a sample, they would still be required to send the exclusion proof without any actual data. If a certain data source is not providing the required proof, it can be detected by the potential users, who can keep track of the data sources via their public verification keys. Afterwards, they can set and adjust their thresholds on how much they would allow such issues, and they will have the prerogative of not proceeding with the usage of the data stream if they deem that it is not reliable due to the presence of such data sources.

Case 2: The data stream owner has access to the VRF secret keys of individual data sources. An example of this case is a factory owner providing the data produced by its sensors on a factory floor. As a result of this possession, the data stream owner can access the secret keys of the data sources, allowing to pre-compute when a data source will be part of a sample in the future. This knowledge opens the possibility for the data stream owner to skew the sample by individually targeting data sources (e.g., censoring/dropping their packets).

This issue would be alleviated if the alpha value would be synchronized among the data sources but not the data stream owner. However, this is not viable because the data sources are owned by the data stream owner.

The potential users could introduce some secret into the updating process of the alpha value for the upcoming epochs (e.g., by sending the same secret nonce to the data sources encrypted with their public keys), such that alpha = epoch number + nonce. As such, the potential users can use the same alpha as the data source and verify the proofs. However, considering that the data stream owner owns the data sources (and has access to their secret keys), this solution also does not address the problem.

On the other hand, employing an omission detection solution as described above will enable the potential data users to again keep track of how often such issues happen, and base their decision to utilize the data stream accordingly.

In conclusion, in either of these cases, the employment of an omission detection approach will help the potential data users in their decision, even when the public input alpha value for the VRF evaluation can be known and used by a potential malicious entity (e.g., data stream owner, individual data sources). In addition, it also helps in situations where there is no malicious entity, but the data stream is unreliable due to network connectivity issues.

In summary, compared to conventional techniques, there may be relevant one or more of the following new aspects: Firstly, sampling from different data sources is used when a stream owner/user needs to collect stream data from its clients in order to solve the scalability and confidentiality problem; Secondly, proofs of correct sampling is used in order to be verified by the sample users/receivers; Third, the sample users/receivers can make a fair decision based on the verification of the sampls.

It is noted that, although in the above-illustrated example embodiments (with reference to the figures), the messages communicated/exchanged between the network components/elements may appear to have specific/explicit names, depending on various implementations (e.g., the underlining technologies), these messages may have different names and/or be communicated/exchanged in different forms/formats, as can be understood and appreciated by the skilled person.

According to some example embodiments, there are also provided corresponding methods suitable to be carried out by the apparatuses (network elements/components) as described above, such as the UE, the CU, the DU, etc.

It should nevertheless be noted that the apparatus (device) features described above correspond to respective method features that may however not be explicitly described, for reasons of conciseness. The disclosure of the present document is considered to extend also to such method features. In particular, the present disclosure is understood to relate to methods of operating the devices described above, and/or to providing and/or arranging respective elements of these devices.

Further, according to some further example embodiments, there is also provided a respective apparatus (e.g., implementing the UE, the CU, the DU, etc., as described above) that comprises at least one processing circuitry, and at least one memory for storing instructions to be executed by the processing circuitry, wherein the at least one memory and the instructions are configured to, with the at least one processing circuitry, cause the respective apparatus to at least perform the respective steps as described above.

Yet in some other example embodiments, there is provided a respective apparatus (e.g., implementing the UE, the CU, the DU, etc., as described above) that comprises respective means configured to at least perform the respective steps as described above.

It is to be noted that examples of embodiments of the disclosure are applicable to various different network configurations. In other words, the examples shown in the above described figures, which are used as a basis for the above discussed examples, are only illustrative and do not limit the present disclosure in any way. That is, additional further existing and proposed new functionalities available in a corresponding operating environment may be used in connection with examples of embodiments of the disclosure based on the principles defined.

It should also to be noted that the disclosed example embodiments can be implemented in many ways using hardware and/or software configurations. For example, the disclosed embodiments may be implemented using dedicated hardware and/or hardware in association with software executable thereon. The components and/or elements in the figures are examples only and do not limit the scope of use or functionality of any hardware, software in combination with hardware, firmware, embedded logic component, or a combination of two or more such components implementing particular embodiments of the present disclosure.

It should further be noted that the description and drawings merely illustrate the principles of the present disclosure. Those skilled in the art will be able to implement various arrangements that, although not explicitly described or shown herein, embody the principles of the present disclosure and are included within its spirit and scope. Furthermore, all examples and embodiment outlined in the present disclosure are principally intended expressly to be only for explanatory purposes to help the reader in understanding the principles of the proposed method. Furthermore, all statements herein providing principles, aspects, and embodiments of the present disclosure, as well as specific examples thereof, are intended to encompass equivalents thereof.

### List of abbreviations:

Trusted Execution Environment (TEE)
Secure Guard Extensions (SGX)
Zero-Knowledge Proof (ZKP)
Machine-Learning-as-a-Service (MLaaS)
Elliptic Curve Digital Signature Algorithm (ECDSA)
Enhanced Privacy ID (EPID)
Trusted Computing Base (TCB)
Data Center Attestation Primitives (DCAP)
Verifiable-Computation-as-a-Service (VCaaS)

## Claims

1. A first network element for providing, as a data source, at least a part of a data stream and/or a data item based on the selection of the first network element to be included in a sample of the data stream, wherein the first network element comprises:
at least one processor; and
at least one memory storing instructions that, when executed by the at least one processor, cause the first network element at least to:
employ a first function with a secret key (SK), specific to the first network element, to determine whether the first network element is selected to be included in the sample;
wherein, if it is determined that the first network element is selected to be included in the sample, provide, to one or more second network elements, at least a part of the data stream and/or data items as part of the sample and to provide an inclusion proof indicating that the data to be part of the data sample was computed correctly.

2. The first network element according to claim 1, wherein the first function is a verifiable random function, VRF, employed at the network element, to independently evaluate the VRF with a secret key (SK) specific to the first network element.

3. The first network element according to claim 1 or 2, wherein if the first network element determines that it is not selected to be included in the sample, the first network element is caused to,
provide, to the second network element, an exclusion proof that said first network element is not selected in the sample, preferably without providing data to be part of the sample.

4. The first network element according to any one of the preceding claims, wherein the first network element is a randomly selected data source of a set of data sources;
the first network element is configured to produce data forming part of the data stream to be provided to the second network element;
the sample is a subset of dataset items of the data stream determined via at least a statistical sampling method;
the sample includes data items of a plurality of first network elements; and/or
the inclusion proof is for verifying that the selection in the sample was computed correctly.

5. The first network element according to any one of the preceding claims, wherein the first network element is further caused to:
evaluate, the first function with the secret key (SK) specific to the first network element and a public key (PK).

6. The first network element according to any of the preceding claims, further configured to signs its produced data with its private key that can be checked with the corresponding public key (PK) and/or verification key.

7. The first network element according to claim 4, wherein, the first network element is further caused to:
receive, from the second network element, a control signal;
generate, the public key (PK) and/or the secret key (SK);
provide, to the second network element, the public key (PK).

8. The first network element according to claim 7, wherein:
the data stream is divided into slots;
the first network element at each slot produces a part of the data of the data stream;
each slot of the data stream is configured with a slot representation value; and wherein,
the slot representation value is used as is used as part of the input to the proof generation and verification .

9. The first network element according to claim 7 or 8, wherein, the slot representation value is obtained by,
updating the slot representation value at predetermined time points, wherein the slot representation value changes incremental at the predetermined time points; or
reaching a consensus for a next value of the slot representation value, if the first network element is part of a decentralized blockchain; or
receiving, from another network element configured to announce the next value of the slot representation value, the next value of the slot representation value; or
obtaining, by requesting from another network element, the next value of the slot representation value.

10. The first network element according to claim 7, wherein
the next value of the slot representation value corresponds to a hash of a previous sample and/or to other arbitrary value determined by another network element.

11. The first network element according to any one of claims 6-10, further comprises:
at each slot, the first network element is configured to use the public key (PK) and the secret key (SK) for the first function evaluation and obtain a pi, which is a VRF proof, calculated based on the public key (PK) as proof of properties of the data stream and/or data item.

12. The first network element according to claim 11, wherein,
the first network element is configured to obtain a value beta, which is a VRF hash output, and uses beta to evaluate whether itself has been selected to be included in the sample in this slot according to a sampling probability algorithm; wherein,
beta is calculated based on pi; wherein,
the sampling probability is used to compute an expected number of the first network elements in the sample by multiplying the total number of the first network elements and the sampling probability.

13. The first network element according to any one of the preceding claims, wherein, the first network element is further caused to:
release the secret key (SK) at a predetermined time period, and
create a new secret key (SK) for the first function evaluations.

14. A method to provide proof-of-correct-sampling for streaming data in a network with at least a first network element and a second network element, wherein the method comprises:
employing, a first function at each first network element, such that each first network element independently evaluates the first function with their own secret key and determines whether they are selected in the sample;
if a first network element determines that it is selected in the sample, provide, to one or more second network elements, at least a part of the data stream and/or data items as part of the sample and an inclusion proof as proof of properties of the data stream and/or data item.

15. A computer program product storing instructions thereon, the instructions, when executed by at least one processing unit of a machine, causing the machine to perform the method according to claim 14.
